# EUROPEAN PATENT APPLICATION

(11) **EP 1 405 898 A1**
(43) Date of publication of application: **07.04.2004**
(21) Application number: 03255287.9
(22) Date of filing: 26.08.2003
(51) Int. Cl.: C10M 141/10, C10M 137/10, C10M 163/00, C07F 9/165, C10N 10/12

(54) **Lubricant composition**

(30) Priority: 02.10.2002 EP 02256851
(71) Applicant: Infineum International Limited, Abingdon, Oxfordshire OX13 6BB (GB)
(72) Inventor: Brown, Alisdair James, Abingdon, Oxfordshire OX14 3GL (GB); Glyde, Roger Woodgate, Bampton, Oxfordshire OX18 2BN (GB); Castle, Rebecca, Kidlington, Oxfordshire OX5 1BL (GB); Gilmore, Jane, Brackley, Northamptonshire NN13 7DQ (GB); Chung, Simon Siu Ming, Witney, Oxfordshire OX28 5JQ (GB); Hartley, Rolfe John, Rockaway, NJ 07866 (US)
(74) Representative: Arunasalam, Velautha-Cumaran

(57) **Abstract**

A lubricant composition comprising a major amount of an oil of lubricating viscosity and a minor amount of:
(A) an oil-soluble or oil-dispersible salt of a dihydrocarbylthiophosphoric acid, which acid is derivable from the reaction of a phosphorus sulfide and
   (1) compound (P) having at least two groups independently selected from hydroxyl (OH) and sulfhydryl (SH), wherein there is at least four, preferably at least five, atoms, separating two groups, preferably any two groups, in compound (P), or
   (II) a mixture of two or more compounds comprising compound (P) as defined in (I) and one or more compounds, wherein each or the compound has at least one group selected from hydroxyl (OH) and sulfhydryl (SH); and
(B) an oil-soluble or oil-dispersible molybdenum compound.

Such a composition has been found to demonstrate improved friction-reducing performance.

## Description

The present invention relates to a lubricant composition comprising a certain salt of a dihydrocarbylthiophosphoric acid and a molybdenum compound. The combination of a certain salt of a dihydrocarbylthiophosphoric acid and a molybdenum compound has been found to provide improved friction-reducing properties.

Lubricant compositions, particularly crankcase lubricant compositions, are sought that provide improved fuel economy and fuel economy retention performance to an internal combustion engine and thereby minimise the amount of fuel used. Molybdenum-containing components have been used in crankcase lubricant compositions to improve the fuel economy and fuel economy retention characteristics of an engine.

Salts of dithiophosphate, particularly zinc salts, are also used in lubricant compositions primarily for wear protection to the engine and oxidant control to the lubricant composition. Such salts are generally prepared by reacting alcohols, typically mono-alcohols, with phosphorus pentasulfide (P₂S₅) and thereafter neutralizing the resulting acid, typically with a metal salt.

The art also disclose use of salts of dithiophosphoric acids derived from polyols. For example, U.S. 4,778,906 discloses zinc salts of dialkyldithiophosphoric acids resulting from mixtures of aliphatic monohydric alcohols and polyols.

U.S. 5,013,465 discloses metal dithiophosphates resulting from a mixture of alcohols and diols, the metal salts being zinc, molybdenum and copper.

U.S. 5,919,740 discloses a sodium, potassium, lithium or oil-soluble amine salt of a dialkyldithiophosphoric acid prepared by reacting P₂S₅ with a mixture of alcohols consisting of a certain polyol and a certain monohydric alcohol.

U.S. 4,259,192 discloses oil-soluble dithiophosphate esters based on poly(oxyalkylene) alcohols as additives for lubricating oil compositions.

U.S. 3,944,495 discloses metal salts where the dithiophosphate has been prepared from alcohols containing an ether or sulfur linkage.

U.S. 3,029,268 discloses phosphorodithioic acids prepared from alcohols where the aliphatic groups can contain inert substituents such as ether, ester, nitro and sulfide.

U.S. 4,450,096 discloses products formed by reacting P₂S₅ with hydrocarbyl vicinol diols having 12-20 carbon atoms then reacting this product with a metal oxide or a metal salt.

It has now been found that improved friction-reducing performance is obtained when a certain salt of a dihydrocarbylthiophosphoric acid and a molybdenum compound are used in combination.

Accordingly, in a first aspect, the present invention provides a lubricant composition comprising a major amount of an oil of lubricating viscosity and, added thereto or admixed therewith, a minor amount of:
(A) an oil-soluble or oil-dispersible salt of a dihydrocarbylthiophosphoric acid, which acid is derivable from the reaction of a phosphorus sulfide and
   (I) compound (P) having at least two groups independently selected from hydroxyl (OH) and sulfhydryl (SH), wherein there is at least four, preferably at least five, atoms, separating two groups, preferably any two groups, in compound (P), or
   (II) a mixture of two or more compounds comprising compound (P) as defined in (I) and one or more compounds, wherein each or the compound has at least one group selected from hydroxyl (OH) and sulfhydryl (SH); and
(B) an oil-soluble or oil-dispersible molybdenum compound.

In a second aspect, the present invention provides an additive concentrate composition suitable for preparing a lubricant composition comprising a diluent fluid and, added thereto or admixed therewith, (A) and (B) as defined in the first aspect.

In a third aspect, the present invention provides the use of (A) and (B) as defined in the first aspect in a lubricant composition to improve the friction characteristics of the lubricant composition or to improve the fuel economy and/or fuel economy retention of an engine lubricated with the lubricant composition.

In a fourth aspect, the present invention provides a process of making a lubricant composition of the first aspect comprising blending a major amount of an oil of lubricating viscosity and a minor amount of an additive concentrate composition of the second aspect or a minor amount of (A) and (B) as defined in the first aspect.

In a fifth aspect, the present invention provides a method of lubricating a surface comprising supplying to the surface a lubricant composition of the first or a lubricant composition made by the process of the third aspect.

In a sixth aspect, the present invention provides an oil soluble or oil-dispersible salt of a dihydrocarbylthiophosphoric acid, which acid is derivable from the reaction of a phosphorus sulfide and
(I) compound (P') having at least two groups independently selected from hydroxyl (OH) and sulfhydryl (SH), wherein there is at least four, preferably at least five, atoms, separating two groups, preferably any two groups, in compound (P') and at least one atom separating two groups, preferably any two groups, in compound (P') is selected from oxygen, sulfur and nitrogen, or
(II) a mixture of two or more compounds comprising compound (P') as defined in (I) and one or more compounds, wherein each or the compound has at least one group selected from hydroxyl (OH) and sulfhydryl (SH).

In a seventh aspect, the present invention provides an additive comprising the oil-soluble or oil-dispersible salt of the sixth aspect, and optionally a diluent fluid.

In an eighth aspect, the present invention provides an additive concentrate composition comprising a diluent fluid, and added thereto or admixed therewith, an additive of the seventh aspect and one or more co-additives.

In a ninth aspect, the present invention provides a lubricant composition comprising a major amount of an oil of lubricating viscosity, and added thereto or admixed therewith, a minor amount of an additive concentrate composition of the eighth aspect, or an additive of the seventh aspect.

In a tenth aspect, the present invention provides a dihydrocarbylthiophosphoric acid as defined in the sixth aspect.

The features of the invention will now be discussed in more detail.

### LUBRICANT COMPOSITION

The lubricant composition according to appropriate aspects may be any composition suitable for lubricating surfaces, examples of such a composition include a crankcase lubricant for passenger vehicles, trucks, tractors and for railroad and other industrial engines, such as marine trunk piston engines; a two-cycle engine oil; and industrial lubricants, such as gear oils, metal working and metal cutting fluids, compressor oils and refrigerant oils. Preferably, the lubricant composition is a crankcase lubricant, more preferably a crankcase lubricant for either a passenger vehicle or a truck, or both thereof, which may be operated by spark- or compression-ignition.

In an embodiment, the lubricant composition has at most 0.15, for example, at most 0.1 or at most 0.09, preferably at most 0.08 or at most 0.07, advantageously at most 0.06, especially at most 0.05, such as at most 0.04 or at most 0.03, mass % of phosphorus, based on the mass of the lubricant composition. Preferably the amount of phosphorus in the lubricant composition is at least 0.01 mass %.

In an embodiment, independently of the other embodiments, the lubricant composition gives less than 1.5, especially less than 1.3, advantageously less than 1.0, preferably less than 0.9, such as in the range from 0.01 to 0.5, mass % of sulfated ash, according to the method ASTM D874.

Preferably the lubricant composition is a multigrade identified by the descriptor SAE 5W-20 or SAE 5W-30, whose properties are defined in the Society of Automotive Engineers document SAE J300.

The oil of lubricating viscosity can be a synthetic or mineral oil of lubricating viscosity selected from the group consisting of Group I, II, III, IV and V basestocks and any mixture thereof. The definitions of Group I, II, III, IV and V basestocks can be found in American Petroleum Institute (API) 1509 "Engine Oil Licensing and Certification System" Fourteenth Edition, December 1996.

Basestocks may be made using a variety of different processes including but not limited to distillation, solvent refining, hydrogen processing, oligomerization, esterification, and re-refining.

### A SALT OF DIHYROCARBYLTHIOPHOSPHORIC ACID

The oil-soluble or oil-dispersible salt of a dihydrocarbylthiophosphoric acid suitable for use in the present invention is typically in the form of an additive comprising one or more oil-soluble or oil-dispersible salts of a dihydrocarbylthiophosphoric acid, and optionally a diluent fluid, such as an oil of lubricating viscosity.

In respect of the first to fifth aspects, it has been found that a combination of (A) an oil-soluble or oil-dispersible salt of a dihydrocarbylthiophosphoric acid, which acid is derivable from the reaction of a phosphorus sulfide and (I) compound (P) having at least two groups independently selected from hydroxyl (OH) and sulfhydryl (SH), wherein there is at least four, preferably at least five, atoms, separating two groups, preferably any two groups, in compound (P), or (II) a mixture of two or more compounds comprising compound (P) as defined in (I) and one or more compounds, wherein each or the compound has at least one group selected from hydroxyl (OH) and sulfhydryl (SH); and (B) an oil-soluble or oil-dispersible molybdenum compound, provides a lubricant composition with better friction-reducing properties.

In respect of the sixth to ninth aspects, it has been found that an oil-soluble or oil-dispersible salt of a dihydrocarbylthiophosphoric acid, which acid is derivable, preferably derived, from the reaction of a phosphorus sulfide and (I) a compound (P') having at least two groups independently selected from hydroxyl (OH) and sulfhydryl (SH), wherein there is at least four, preferably at least five, atoms, separating two groups, preferably any two groups, in compound (P') and at least one atom separating two groups, preferably any two groups, in compound (P') is selected from oxygen, sulfur and nitrogen, or (II) a mixture of two or more compounds comprising compound (P') as defined in (I) and one or more compounds, wherein each or the compound has at least one group selected from hydroxyl (OH) and sulfhydryl (SH), provides performance in a lubricant composition, such as anti-oxidancy and anti-wear.

Therefore, compound (P), in respect of the first to fifth aspects, alone or in a mixture of compounds is used to prepare a dihydrocarbylthiophosphoric acid, which is thereafter reacted with a cation source to form the salt (A).

Similarly, compound (P' ) is used alone or in a mixture to form the salt in respect of the sixth to ninth aspects. For the avoidance of doubt, compound (P') is a preferred embodiment of compound (P).

The compound used to prepare a dihydrocarbylthiophosphoric acid may be represented by ROH or RSH, where R represents a hydrocarbyl group, or a substituted derivative thereof, optionally containing one or more groups independently selected from hydroxyl (OH) and sulfhydryl (SH); and in the event that the compound is compound (P) R represents a hydrocarbyl, or a substituted derivative thereof group, containing one or more groups independently selected from hydroxyl (OH) and sulfhydryl (SH), wherein there are at least four, preferably five, atoms, separating two groups, preferably any two groups, in compound (P).

The hydrocarbyl group R is preferably free of unsaturation, whether acetylenic or ethylenic unsaturation. Preferably the hydrocarbyl group R has 1 to 50, more preferably 1 to 30, especially 3 to 18, advantageously 3 to 8, carbon atoms. Examples of R include alkyl, such as ethyl, n-propyl, i-propyl, n-butyl, i-butyl; sec-butyl, amyl, n-hexyl; i-hexyl, n-heptyl, n-octyl, and decyl; cycloalkyl; alkyl-substituted cycloalkyl; aryl, such as phenyl and naphthyl; alkylaryl; arylalkyl; alkoxyalkyl; alkoxyaryl; and substituted derivatives thereof, such as an oxygen or sulfur atom interrupting an alkyl chain, *e.g.* R³XR⁴ where X represents an oxygen, sulfur or NR⁵ group, R³ and R⁴ independently represent a hydrocarbyl group as defined above for R and R⁵ represents hydrogen or a hydrocarbyl group as defined above for R. The hydrocarbyl group R may also contain other substituent groups, such as a carboxylic acid, or derivative thereof, and N-containing groups, such as an amine, in which event R represents a substituted derivative of a hydrocarbyl group.

General examples of compounds include aliphatic or aromatic alcohols, thiols and substituted derivatives thereof.

Specific examples of substituted compounds are disclosed in US-A-4244827, 5013465, 3029268, 4259192, 3944495, 4410434, 4400283, and 5306436.

Preferably compound (P) has at least three, more preferably at most four, groups, independently selected from a hydroxyl (OH) group and a sulfhydryl (SH) group.

In an embodiment, compound (P) has at least two hydroxyl groups, more preferably compound (P) has only two hydroxyl groups.

In another embodiment, independently of the other embodiments, the number of atoms separating two groups, preferably any two groups, in compound (P) is at least six, more preferably at least seven, such as in the range of eight to ten. For the avoidance of doubt, the number of atoms separating any two groups is based on those atoms that form a direct link between the two groups.

The atoms separating the groups in compound (P) may be independently selected from carbon, oxygen, nitrogen and sulfur.

Preferably compound (P') is used to prepare the dihydrocarbylthiophosphoric acid, in which event at least one atom separating two groups, preferably any two groups, in compound (P) is selected from oxygen, sulfur and nitrogen; more preferably selected from oxygen and sulfur.

In a preferred embodiment, compound (P') has carbon and oxygen atoms separating two groups, preferably any two groups; more preferably, compound (P') has one oxygen atom amongst the atoms separating two groups, preferably any two groups.

Preferably the dihydrocarbylthiophosphoric acid is derivable from the reaction of a phosphorus sulfide and a mixture of two or more compounds, provided that the mixture comprises compound (M) having one group selected from hydroxyl and sulfhydryl and compound (P).

In a preferred embodiment, dihydrocarbylthiophosphoric acid is derivable from the reaction of a phosphorus sulfide and a mixture consisting essentially, preferably consisting, of compound (M) and compound (P).

In an embodiment, compound (M) has one hydroxyl group.

In the event that a mixture containing two or more compounds is used in preparing a dihydrocarbylthiophosphoric acid, the amount of compound (P), based on the hydroxyl and sulfhydryl groups, present in the mixture is preferably at most 50, more preferably at most 40, especially at most 30, advantageously at most 25, such as in the range of 5 to 20, for example, in the range of 7 to 15, mole %, based on the total hydroxyl and sulfhydryl groups in the mixture. For the avoidance of any doubt, the amount of compound (P) in the mixture may also be expressed as at most 50, more preferably at most 40, especially at most 30, advantageously at most 25, such as in the range of 5 to 20, for example, in the range of 7 to 15, equivalent %, based on the total equivalents of the compounds in the mixture.

The embodiments described above for compound (P) are also applicable to compound (P').

The hydroxyl and sulfhydryl groups on the compounds, for example, compound (M), compound (P) and compound (P'), may be independently attached to a primary, secondary or tertiary carbon atom or an aromatic carbon atom on the compound, preferably a primary or secondary carbon atom. Preferably, each of compound (P), compound (P') and compound (M) are selected from acyclic compounds.

Examples of compound (P) include 1,5-pentanediol, 3-methyl-1,5-hexanediol, which has five carbon atoms separating the two hydroxyl groups, 1,6-hexanediol, and a product derived from the reaction of a glycol, such as ethylene glycol, propylene glycol and a butylene glycol, and an alkylene oxide, such as ethylene oxide, propylene oxide and a butylene oxide, such as diethylene glycol, a dipropylene glycol and isomers thereof. Preferably compound (P) is selected from 1,6-hexanediol and a dipropylene glycol, more preferably a dipropylene glycol, such as 2,4-methyl-3-oxa-1,5-pentanediol, 4-oxa-2,6-heptanediol and 2-methyl-3-oxa-1,5-hexanediol.

Examples of compound (P') include thioether polyols and ether polyols, such as diethylene glycol and a dipropylene glycol, such as 2,4-methyl-3-oxa-1,5-pentanediol, 4-oxa-2,6-heptanediol and 2-methyl-3-oxa-1,5-hexanediol.

Examples of compound (M) are mono-alcohols, *i.e.* compounds having only one OH group, which are aliphatic mono-alcohols, which preferably have 3 to 18 carbon atoms. Specific examples include 1-propanol, 2-propanol, 1-butanol, 2-methyl-1-propanol, 2-butanol, 5-pentanol, 4-methyl-2-pentanol, *iso-*octanol*,* 2-ethyl-1-hexanol, 2-octanol, 2-nonanol, 1-decanol and 1-tridecanol.

The salt of a dihydrocarbylthiophosphoric acid is preferably a salt of an amine or ammonia or a metal selected from alkali metal, alkaline earth metal and transition metal.

Examples of suitable metal include sodium, lithium, potassium, calcium, magnesium, molybdenum, tungsten, and zinc. In the event (A) is a molybdenum salt, (B) is a compound different from the molybdenum salt (A).

Examples of amines are primary, secondary and tertiary aliphatic amines.

Zinc salts are preferred.

Generally, processes for preparing a salt of a dihydrocarbylthiophosphoric acid are known in the art and involve reacting a dihydrocarbylthiophosphoric acid with a cation source, such as a metal. Such processes are also applicable to a salt of a dihydrocarbylthiophosphoric acid of the present invention: see for example, EP-A-0516461, WO 01/44419 and US-A-5919740.

Processes for preparing a dihydrocarbylthiophosphoric acid, in particular processes for a dihydrocarbyldithiophosphoric acid involve reacting a phosphorus sulfide, such as phosphorus pentasulfide, with one or more types of alcohol in a molar ratio of about 1 to 4, in the event that each type of alcohol is a mono-alcohol. Generally, the molar ratio is a slight excess of alcohol so that the entire phosphorus sulfide is used in the reaction.

Generally, the preparation of the dihydrocarbylthiophosphoric acid comprises reacting a phosphorus sulfide with one or more compounds, such as alcohols, at a temperature of range of 50 to 200 °C for 1 to 10 hours. Hydrogen sulfide is liberated during the reaction. The mole ratio of the phosphorus sulfide to the compounds depends on the phosphorus sulfide and compound used. Once the dihydrocarbylthiophosphoric acid reaction is complete, the acid product may be stripped and cooled with an inert gas such as nitrogen to remove all traces of hydrogen sulfide. Any unreacted compound, P₂S₅ or other solids can be removed by decantation, filtration or centrifugation.

The phosphorus sulfide may be selected from one or more of P₂S₃, P₂S₅, P₄S₇, P₄S₃, P₄S₉; phosphorus pentasulfide (P₂S₅) is the preferred phosphorus sulfide source. The actual structure of phosphorus pentasulfide is believed to be P₄S₁₀, but for the purposes of this invention it shall be considered and referred to as P₂S₅.

Processes for making the salts of the dihydrocarbylthiophosphoric acids of the present invention involve the preparation of a dihydrocarbylthiophosphoric acid and then neutralising the acid with a cation source.

The dihydrocarbylthiophosphoric acid can be neutralised by contacting a cation source, such as a metal salt, *e.g.* metal oxide, metal hydroxide and metal carbonate, or an ammonium cation source, such as an amine and ammonia. The temperature and pressure conditions vary depending on the cation source and the acid being neutralised.

The molar proportion of the dihydrocarbylthiophosphoric acid to the cation source is typically on the basis of one equivalent of the acid to one equivalent of the cation source. Such products are termed 'neutral' products.

In the event the cation source is zinc salt, basic thiophosphates are preferred, in which event the cation source is present in an excess, *i.e.* more than one equivalent of cation source to one equivalent of the acid.

Processes whereby:
- alcohol and/or a carboxylic acid or salt thereof is used to reduce the proportion of sediment in the manufacture of salts of thiophosphoric acid (see, for example, US-A-5627294); or
- thiophosphoric acid is treated with additional phosphorus sulfide before neutralising to obtain metal salts with the desired metal to phosphorus ratio (see, for example, US-A-5384054); or
- metal oxides are used having desired surface area to obtain metal salts with the desired metal to phosphorus ratio (see, for example, US-A-5380448);
are also applicable to the process for making the salt of a dihydrocarbylthiophosphoric acid of the present invention.

In a preferred embodiment, the salt of a dihydrocarbylthiophosphoric acid of appropriate aspects of the present invention is a zinc salt of dihydrocarbyldithiophosphoric acid derived from the reaction of phosphorus pentasulfide and a mixture containing 2-methyl-4-pentanol and either 1,6-hexanediol or dipropylene glycol, preferably a mixture containing 2-methyl-4-pentanol and dipropylene glycol.

In a preferred embodiment of the seventh aspect, the additive comprises the oil-soluble or oil-dispersible salt of the sixth aspect and a diluent fluid.

In an embodiment, the lubricant composition has at most 0.15, for example, at most 0.1 or at most 0.09, preferably at most 0.08 or at most 0.07, advantageously at most 0.06, especially at most 0.05, such as at most 0.04 or at most 0.03, mass % of phosphorus, based on the mass of the lubricant composition. Preferably the amount of phosphorus in the lubricant composition is at least 0.01 mass %.

The lubricant composition has preferably most 0.15, for example, at most 0.1 or at most 0.09, more preferably at most 0.08 or at most 0.07, advantageously at most 0.06, especially at most 0.05, such as at most 0.04 or at most 0.03, most preferably at least 0.01, mass % of phosphorus, derived from the salt of a dihydrocarbylthiophosphoric acid of the present invention.

### A MOLYBDENUM COMPOUND

The oil-soluble or oil-dispersible molybdenum compound suitable for use in the present invention is typically in the form of a molybdenum additive comprising one or more oil-soluble or oil-dispersible molybdenum compounds. In a preferred embodiment, the molybdenum compound is a molybdenum-sulfur compound.

The molybdenum-sulfur compounds useful in the present invention may be mononuclear or polynuclear. In the event that the compound is polynuclear, the compound contains a molybdenum core consisting of non-metallic atoms, such as sulfur, oxygen and selenium, preferably consisting essentially of sulfur.

To enable the molybdenum-sulfur compound to be oil-soluble or oil-dispersible, one or more ligands are bonded to a molybdenum atom in the compound. The bonding of the ligands includes bonding by electrostatic interaction as in the case of a counter-ion and forms of bonding intermediate between covalent and electrostatic bonding. Ligands within the same compound may be differently bonded. For example, a ligand may be covalently bonded and another ligand may be electrostatically bonded.

Preferably, the or each ligand is monoanionic and examples of such ligands are dithiophosphates, dithiocarbamates, xanthates, carboxylates, thioxanthates, phosphates and hydrocarbyl, preferably alkyl, derivatives thereof. Preferably, the ratio of the number of molybdenum atoms, for example, in the core in the event that the molybdenum-sulfur compound is a polynuclear compound, to the number of monoanionic ligands, which are capable of rendering the compound oil-soluble or oil-dispersible, is greater than 1 to 1, such as at least 3 to 2.

The molybdenum-sulfur compound's oil-solubility or oil-dispersibility may be influenced by the total number of carbon atoms present among all of the compound's ligands. The total number of carbon atoms present among all of the hydrocarbyl groups of the compound's ligands typically will be at least 21, *e.g.* 21 to 800, such as at least 25, at least 30 or at least 35. For example, the number of carbon atoms in each alkyl group will generally range between 1 to 100, preferably 1 to 40, and more preferably between 3 and 20.

Examples of molybdenum-sulfur compounds include dinuclear molybdenum-sulfur compounds and trinuclear molybdenum-sulfur compounds.

An example of a dinuclear molybdenum-sulfur compound is represented by the formula: 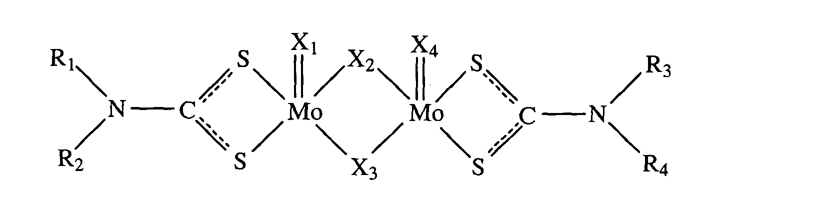 where R₁ to R₄ independently denote a straight chain, branched chain or aromatic hydrocarbyl group having 1 to 24 carbon atoms; and X₁ to X₄ independently denote an oxygen atom or a sulfur atom. The four hydrocarbyl groups, R₁ to R₄, may be identical or different from one another.

In a preferred embodiment, the molybdenum-sulfur compound is an oil-soluble or oil-dispersible trinuclear molybdenum-sulfur compound. Examples of trinuclear molybdenum-sulfur compounds are disclosed in WO98/26030, WO99/31113, WO99/66013, EP-A-1 138 752, EP-A-1 138 686 and European patent application no. 02078011, each of which are incorporated into the present description by reference, particularly with respect to the characteristics of the molybdenum compound or additive disclosed therein.

Preferably the molybdenum-sulfur compound has a core of the structures depicted in (I) or (II): 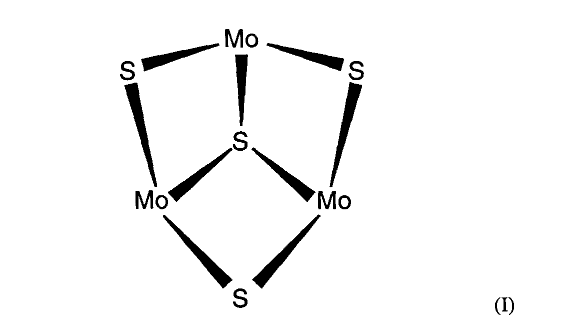 or

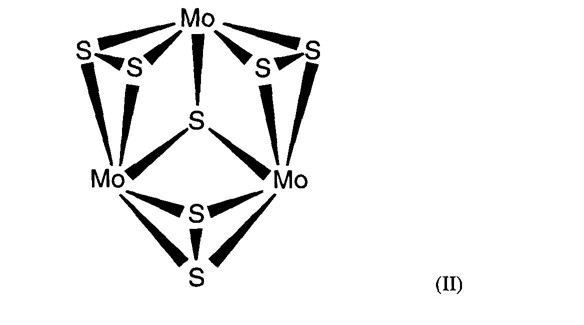

Each core has a net electrical charge of +4.

Preferably, the trinuclear molybdenum-sulfur compounds are represented by the formula Mo₃SₖEₓLₙApQ_{z}, wherein:
k is an integer of at least 1;
E represents a non-metallic atom selected from oxygen and selenium;
x can be 0 or an integer, and preferably k + x is at least 4, more preferably in the range of 4 to 10, such as 4 to 7, most preferably 4 or 7;
L represents a ligand that confers oil-solubility or oil-dispersibility on the molybdenum-sulfur compound, preferably L is a monoanionic ligand;
n is an integer in the range of 1 to 4;
A represents an anion other than L, if L is an anionic ligand;
p can be 0 or an integer;
Q represents a neutral electron-donating compound; and
z is in the range of 0 to 5 and includes non-stoichiometric values.

Those skilled in the art will realise that formation of the trinuclear molybdenum-sulfur compound will require selection of appropriate ligands (L) and other anions (A), depending on, for example, the number of sulfur and E atoms present in the core, i.e. the total anionic charge contributed by sulfur atom(s), E atom(s), if present, L and A, if present, must be -12. The trinuclear molybdenum-sulfur compound may also have a cation other than molybdenum, for example, (alkyl)ammonium, amine or sodium, if the anionic charge exceeds -12.

Examples of Q include water, alcohol, amine, ether and phosphine. It is believed that the electron-donating compound, Q, is merely present to fill any vacant coordination sites on the trinuclear molybdenum-sulfur compound.

Examples of A can be of any valence, for example, monovalent and divalent and include disulfide, hydroxide, alkoxide, amide and, thiocyanate or derivative thereof; preferably A represents a disulfide ion.

Preferably, L is monoanionic ligand, such as dithiophosphates, dithiocarbamates, xanthates, carboxylates, thioxanthates, phosphates and hydrocarbyl, preferably alkyl, derivatives thereof. When n is 2 or more, the ligands can be the same or different.

In an embodiment, independently of the other embodiments, k is 4 or 7, n is either 1 or 2, L is a monoanionic ligand, p is an integer to confer electrical neutrality on the compound based on the anionic charge on A and each of x and z is 0.

In a further embodiment, independently of the other embodiments, k is 4 or 7, L is a monoanionic ligand, n is 4 and each of p, x and z is 0.

The molybdenum-sulfur cores, for example, the structures depicted in (I) and (II) above, may be interconnected by means of one or more ligands that are multidentate, *i.e.* a ligand having more than one functional group capable of binding to a molybdenum atom, to form oligomers. Molybdenum-sulfur additives comprising such oligomers are considered to fall within the scope of this invention.

Other examples of molybdenum compounds include molybdenum carboxylates and molybdenum nitrogen complexes, both of which may be sulfurised.

The lubricant composition has preferably 1 to 1000, more preferably from 20 to 500, such as 50 to 300, ppm by mass, of elemental molybdenum derived from the molybdenum compound, based on the mass of the lubricant composition.

### ADDITIVE CONCENTRATE COMPOSITION

The salt of a dihydrocarbylthiophosphoric acid and the molybdenum compound defined in the first aspect may be present in an additive concentrate composition of the second aspect with one or more other co-additives. For the avoidance of doubt, the salt of a dihydrocarbylthiophosphoric acid and the molybdenum compound are each manufactured and used in the form an additive, which additive typically comprises a diluent fluid, such as an oil of lubricating viscosity.

Similarly, the salt of a dihydrocarbylthiophosphoric acid of the sixth aspect may also be provided in an additive concentrate composition.

In the preparation of the lubricant compositions, it is common practice to introduce additives therefor in the form of additive concentrate composition(s) containing the additives.

An additive concentrate composition constitutes a convenient means of handling two or more additives before their use, as well as facilitating solution or dispersion of the additives in lubricant compositions. When preparing a lubricant composition that contains more than one type of additive (sometimes referred to as "additive components"), each additive may be incorporated separately. In many instances, however, it is convenient to incorporate the additives as an additive concentrate composition (a so-called additive "package" (also referred to as an "adpack")) comprising two or more additives.

Examples of co-additives include dispersants, detergents, rust inhibitors, anti-wear agents other than the salt of a thiophosphoric acid defined in the first aspect, antioxidants, corrosion inhibitors, friction modifiers other than the molybdenum compound defined in the first aspect, pour point depressants, anti-foaming agents, viscosity modifiers, including multifunctional viscosity modifiers, such as a dispersant viscosity modifier, and surfactants.

An additive concentrate may contain 1 to 90, such as 10 to 80, preferably 20 to 80, more preferably 40 to 70, mass % based on active ingredient, of the additives, the remainder being an oleaginous carrier or diluent fluid. The final lubricant composition may typically contain 5 to 40 mass % of the additive concencentrate(s).

Generally the viscosity of the additive concentrate is higher than that of the lubricant composition. Typically, the kinematic viscosity at 100 °C of the additive concentrate is at least 50, such as in the range 100 to 200, preferably 120 to 180, mm²s⁻¹ (or cSt).

The amount of elemental molybdenum, derived from the molybdenum compound defined in the second aspect, present in the additive concentrate composition is preferably in the range of 0.015 to 1.4 mass %, based on the mass of the additive concentrate composition.

The amount of elemental phosphorus, derived from the salt of the thiophosphoric acid defined in the second aspect, present in the additive concentrate composition is preferably in the range of 0.05 to 2.15 mass %, based on the mass of the additive concentrate composition.

The amount of molybdenum and phosphorus present in any composition is measured by ASTM D5185.

Examples of diluent fluid include suitable oleaginous, typically hydrocarbon, solvents, such as oils of lubricating viscosity selected from vegetable, animal, mineral and synthetic oils.

The preparation of a lubricant composition of the first aspect may be accomplished by blending the salt of the thiophosphoric acid and the molybdenum compound defined in the first aspect directly with oil of lubricating viscosity or by blending them in the form of an additive concentrate composition according to the second aspect with oil of lubricating viscosity. Additives may be blended to the oil by any method known to those skilled in the art, either prior to, contemporaneously with, or subsequent to addition of other additives.

It should be appreciated that interaction may take place between any two or more of the additives after they have been incorporated into the additive concentrate composition or lubricant composition. The interaction may take place in either the process of blending or any subsequent condition to which the composition is exposed, including the use of the composition in its working environment. Interactions may also take place when further auxiliary additives are added to the compositions of the invention or with components of oil. Such interaction may include interaction that alters the chemical constitution of the additives. Thus for example the compositions of the invention include compositions in which interaction, for example, between any of the additives, has occurred, as well as compositions in which no interaction has occurred, for example, between the components blended into the oil.

In this specification:
The term 'molybdenum-sulfur compound' means a compound having at least one molybdenum atom and at least one sulfur atom, preferably the compound has at least one sulfur atom that is bonded to one or more molybdenum atoms and also bonded to one or more non-molybdenum atoms, such as carbon, more preferably the compound has at least one sulfur atom that is bonded to one or more molybdenum atoms only, such as represented by cores [Mo₂S_{4]}, [Mo₃S_{4]} and [Mo₃S₇] . Atoms selected from oxygen and selenium may replace one or more sulfur atoms in such cores. Advantageously, the core consists of molybdenum and sulfur atoms alone. Accordingly, the term 'molybdenum-sulfur additive' means an additive comprising one or more molybdenum-sulfur compounds.
The term "hydrocarbyl" as used means that the group concerned is primarily composed of hydrogen and carbon atoms and is bonded to the remainder of the molecule *via* a carbon atom, but does not exclude the presence of other atoms or groups in a proportion insufficient to detract from the substantially hydrocarbon characteristics of the group.
The term "comprising" or "comprises" means the presence of stated features, integers, steps or components, but does not preclude the presence or addition of one or more other features, integers, steps, components or groups thereof. In the instance the term "comprising" or comprises" is used herein, the term "consisting essentially of" and its cognate are within its scope and are a preferred embodiment of it, and consequently the term "consisting of" and its cognate are within the scope of "consisting essentially of" and are a preferred embodiment of it.
The term "oil-soluble" or "oil-dispersible" does not mean that the compounds are soluble, dissolvable, miscible or capable of being suspended in the oil in all proportions. They do mean, however, that the compounds are, for instance, soluble or stable dispersible in the oil to an extent sufficient to exert their intended effect in the environment in which the composition is employed. Moreover, the additional incorporation of other additives such as those described above may affect the solubility or dispersibility of the compounds.
The term "major amount" means in excess of 50, such as greater than 70, preferably 75 to 97, especially 80 to 95 or 90, mass %, of the composition.
The term "minor amount" means less than 50, such as less than 30, for example, 3 to 25, preferably 5 or 10 to 20, mass %, of the composition mass % of the composition.
The term "blending" means the action of mixing at a temperature so that a suitable homogenous composition is attained.
The term 'compound (P)' or 'compound (P')' or 'compound (M)' means either a single compound satisfying the corresponding definition or a mixture of compounds each satisfying the corresponding definition.

All percentages reported are mass % on an active ingredient basis, i.e. without regard to carrier or diluent oil, unless otherwise stated.

The invention is illustrated by, but in no way limited to, the following examples.

### EXAMPLES

### Description of the ZDDPs

ZDDP A is a zinc dialkyldithiophosphate, which dialkyldithiophosphate is derived from the reaction of phosphorus pentasulfide and a mixture of two mono-alcohols having four and eight carbon atoms. It has a phosphorus content of 8.0 mass % and a zinc content of 8.8 mass %.

ZDDP B is a zinc dialkyldithiophosphate, which dialkyldithiophosphate is derived from the reaction of phosphorus pentasulfide and a mixture of two mono-alcohols having four and five carbon atoms. It has a phosphorus content of 8.0 mass % and a zinc content of 8.8.

ZDDP 1 is a zinc dialkyldithiophosphate, which dialkyldithiophosphate is derived from the reaction of phosphorus pentasulfide and a mixture of 4-methyl-2-pentanol and 1,6-hexanediol in a molar ratio of 3.7 to 0.25 (or 3.7 to 0.5 molar ratio based on hydroxyl groups or 3.7 to 0.5 on an equivalent basis). The synthesis of the component ZDDP 1 involves preparing the dialkyldithiophosphoric acid and then reacting the acid with a zinc oxide. The dialkyldithiophosphoric acid was prepared by adding finely powdered phosphorus pentasulfide (446g) to an alcohol mixture containing 1,6-hexanediol (59g) and 4-methyl-2-pentanol (756g) at 65°C over a period of 90 minutes and under a constant flow of nitrogen. The mixture was then maintained at 85°C for a further 120 minutes before the resulting product was cooled. An initial portion of the dialkyldithiophosphoric acid (250g) was added over 30 minutes to a thoroughly mixed zinc oxide oil slurry (289g, 50 % concentration) at ambient temperature. An exothermic reaction took the temperature to approximately 45°C. Then the remaining dialkyldithiophosphoric acid (750g) was added over a period of 75 minutes.
Temperature of the reaction was increased to 85°C over 20 minutes and maintained at that temperature for a further 75 minutes. The resulting water by-product was removed under reduced pressure at 85°C and filtered to yield the product as a viscous liquid. ZDDP 1 has a phosphorus content of 8.4 mass % and a zinc content of 9.0 mass %.

ZDDP 2 is a zinc dialkyldithiophosphate, which dialkyldithiophosphate is derived from the reaction of phosphorus pentasulfide and a mixture of 4-methyl-2-pentanol and dipropylene glycol in a molar ratio of 3.7 to 0.25 (or 3.7 to 0.5 molar ratio based on hydroxyl groups or 3.7 to 0.5 on an equivalent basis). The synthesis of the component ZDDP 2 is similar to that of ZDDP 1, but the alcohol mixture used in preparing the dialkyldithiophosphoric acid contained dipropylene glycol (67g) and 4-methyl-2-pentanol (756g), and resulting acid (1000g) was neutralised with a zinc oxide oil slurry (283g, 50% concentration). ZDDP 2 has a phosphorus content of 7.8 mass % and a zinc content of 8.5 mass %.

### Description of the Lubricant Compositions

Lubricant compositions comprising conventional additives, a ZDDP component and, optionally, a molybdenum component, were prepared by methods known in the art (see Table 1 for details).

**Table 1:**

| | Oil 1 | Oil 2 | Oil 3 | Oil 4 | Oil 5 | Oil 6 | Oil 7 | Oil 8 |
|---|---|---|---|---|---|---|---|---|
| ZDDP component | A | B | 1 | 2 | A | B | 1 | 2 |
| molybdenum, ppm | 0 | 0 | 0 | 0 | 89 | 95 | 93 | 88 |

Oils 7 and 8 are compositions of the invention, whereas Oils 1 and 6 are compositions provided for comparative purposes. Each oil was blended to 500 ppm of phosphorus and contained the same conventional additives blended to identical proportions. The molybdenum component, if present, is a trinuclear molybdenum dithiocarbamate prepared by the process described in Example 1 of WO99/31113, but without the use of toluene and involved no filtration step, and which was then heated to about 160°C for 4 hours.

### Testing

Oils 1 to 8 were tested in a High Frequency Reciprocating Rig (HFRR) for friction performance at 140°C over 60 minutes (see Table 2). The HFRR provides information about boundary friction and the rig is described in a paper presented by CH Bovington entitled 'The Influence of Engine Oils on Friction Reduction' at the 12th International Colloquium, January 2000: Tribology 2000 - Plus, volume 1, page 393, Technische Akademie Esslingen. The average friction coefficient obtained from HFRR gives an indication of the performance of the oil and can translate to improved fuel economy in the engine.

**Table 2:**

| | Oil 1 | Oil 2 | Oil 3 | Oil 4 | Oil 5 | Oil 6 | Oil 7 | Oil 8 |
|---|---|---|---|---|---|---|---|---|
| average friction, µ | 0.106 | 0.105 | 0.111 | 0.113 | 0.103 | 0.101 | 0.070 | 0.068 |

From Table 2, it is seen that Oils 1 to 4, none of which contains a molybdenum component, gave comparable friction performance. Further Oils 5 and 6, each of which contains a molybdenum component, also gave comparable performance to those of Oils 1 to 4. In contrast, the friction performance of Oils 7 and 8, each of which contains a ZDDP component according to the invention and a molybdenum component, demonstrated superior friction performance (*i.e.* a lower co-efficient of friction) compared to the oils containing ZDDP component A and B (Oils 5 & 6 respectively) and compared to the oils containing no molybdenum component (Oils 1 to 4).

Oils 5 and 8 were also tested in a traction rig, which provides the data points for plotting the Stribeck Curve. The rig is described in a paper presented by CH Bovington entitled 'The Influence of Engine Oils on Friction Reduction' at the 12th International Colloquium, January 2000: Tribology 2000 - Plus, volume 1, page 393, Technische Akademie Esslingen. Traction coefficients were measured at 135°C on the fresh oils and oils aged at 135°C for 6 hours as a function of entrainment speed under elastohydrodynamic "mixed" and full film conditions. The test is considered to indicate the retentive properties of an oil composition.

**Table 3:**

| | Oil 5, fresh | Oil 5, 6 hours | Oil 8, fresh | Oil 8, 6 hours |
|---|---|---|---|---|
| area under Stribeck curve | 1.04802 | 1.48103 | 0.74900 | 1.02590 |

Table 3 shows the area under Stribeck curve for each oil sample; a smaller area is indicative of superior performance. The data clearly show that Oil 8 containing the ZDDP component according to the invention and a molybdenum component provides better performance and is able to maintain its performance over an extended period. Indeed, the performance of Oil 8 after 6 hours of ageing is comparable to that of Oil 5 at the beginning of the test, *i.e.* before any ageing has begun.

## Claims

1. A lubricant composition comprising a major amount of an oil of lubricating viscosity and, added thereto or admixed therewith, a minor amount of:
(A) an oil-soluble or oil-dispersible salt of a dihydrocarbylthiophosphoric acid, which acid is derivable from the reaction of a phosphorus sulfide and
(I) compound (P) having at least two groups independently selected from hydroxyl (OH) and sulfhydryl (SH), wherein there is at least four, preferably at least five, atoms, separating two groups, preferably any two groups, in compound (P), or
(II) a mixture of two or more compounds comprising compound (P) as defined in (I) and one or more compounds, wherein each or the compound has at least one group selected from hydroxyl (OH) and sulfhydryl (SH); and
(B) an oil-soluble or oil-dispersible molybdenum compound.

2. The lubricant composition claimed in claim 1, wherein the dihydrocarbylthiophosphoric acid is derivable from the reaction of a phosphorus sulfide and a mixture of two or more compounds as defined in claim 1, provided that the mixture comprises compound (M) having one group selected from hydroxyl (OH) and sulfhydryl (SH) and compound (P) as defined in claim 1.

3. The lubricant composition claimed in either claim 1, in the event that there is a mixture of two or more compounds, or claim 2, wherein the amount of the compound (P), based on the hydroxyl (OH) and sulfhydryl (SH) groups, present in the mixture is at most 50 mole %, based on the total hydroxyl (OH) and sulfhydryl (SH) groups in the mixture.

4. The lubricant composition claimed in any one of claims 1 to 3, wherein compound (P) comprises at least two hydroxyl groups.

5. The lubricant composition claimed in any one of claims 1 to 4, wherein there is at least six atoms separating two groups, preferably any two groups, in compound (P).

6. The lubricant composition claimed in any one of claims 1 to 5, wherein at least one atom separating two groups, preferably any two groups, in compound (P) is selected from oxygen, sulfur and nitrogen.

7. The lubricant composition claimed in any one of claims 2 to 6, wherein the compound (M) is an aliphatic mono-alcohol.

8. The lubricant composition claimed in any one of claims 1 to 7, wherein the compound (P) is derived from the reaction of a glycol and an alkylene oxide.

9. The lubricant composition claimed in any one of claims 1 to 8, wherein the dihydrocarbylthiophosphoric acid is a salt of an amine or ammonia or a metal selected from alkali metal, alkaline earth metal and transition metal.

10. The lubricant composition claimed in any one of claims 1 to 9, wherein the molybdenum compound is a trinuclear molybdenum compound.

11. The lubricant composition claimed in any one of claims 1 to 10, wherein the lubricant composition has at most 0.15 mass % of phosphorus, based on the mass of the lubricant composition.

12. An additive concentrate composition suitable for preparing a lubricant composition comprising a diluent fluid and, added thereto or admixed therewith, (A) and (B) as defined in claim 1.

13. The use of (A) and (B) as defined in claim 1 in a lubricant composition to improve the friction characteristics of the lubricant composition or to improve the fuel economy and/or fuel economy retention of an engine lubricated with the lubricant composition.

14. A process for making a lubricant composition as claimed in any one of claims 1 to 11 comprising blending a major amount of an oil of lubricating viscosity and a minor amount of an additive concentrate composition as claimed in claim 12 or a minor amount of (A) and (B) as defined in claim 1.

15. A method of lubricating a surface comprising supplying to the surface a lubricant composition as claimed in any one of claim 1 to 11 or made by the process as claimed in claim 14.

16. An oil-soluble or oil-dispersible salt of a dihydrocarbylthiophosphoric acid, which acid is derivable from the reaction of a phosphorus sulfide and
(I) a compound (P') having at least two groups independently selected from hydroxyl (OH) and sulfhydryl (SH), wherein there is at least four, preferably at least five, atoms, separating two groups, preferably any two groups, in compound (P') and at least one atom separating two groups, preferably any two groups, in compound (P') is selected from oxygen, sulfur and nitrogen, or
(II) a mixture of two or more compounds comprising compound (P') as defined in (I) and one or more compounds, wherein each or the compound has at least one group selected from hydroxyl (OH) and sulfhydryl (SH).

17. An additive comprising the oil-soluble or oil-dispersible salt as claimed in claim 16, and optionally a diluent fluid.

18. An additive concentrate composition comprising a diluent fluid, and added thereto or admixed therewith, an additive as claimed in claim 17 and one or more co-additives.

19. A lubricant composition comprising a major amount of an oil of lubricating viscosity, and added thereto or admixed therewith, a minor amount of an additive concentrate composition as claimed in claim 18, or an additive as claimed in 17.

20. A dihydrocarbylthiophosphoric acid, which acid is derivable from the reaction of a phosphorus sulfide and
(I) a compound (P') having at least two groups independently selected from hydroxyl (OH) and sulfhydryl (SH), wherein there is at least four, preferably at least five, atoms, separating two groups, preferably any two groups, in compound (P') and at least one atom separating two groups, preferably any two groups, in compound (P') is selected from oxygen, sulfur and nitrogen, or
(II) a mixture of two or more compounds comprising compound (P') as defined in (I) and one or more compounds, wherein each or the compound has at least one group selected from hydroxyl (OH) and sulfhydryl (SH).
